# EUROPÄISCHE PATENTSCHRIFT

(11) **EP 3 942 741 B1**
(45) Veröffentlichungstag und Bekanntmachung des Hinweises auf die Patenterteilung: **17.07.2024**
(21) Anmeldenummer: 20712309.2
(22) Anmeldetag: 17.03.2020
(51) Int. Cl.: H04L 12/40, H04L 43/0817, H04L 43/065

(54) **BUSANORDNUNG UND VERFAHREN ZUM BETREIBEN EINER BUSANORDNUNG**
BUS ARRANGEMENT AND METHOD FOR OPERATING A BUS ARRANGEMENT
SYSTÈME DE BUS ET PROCÉDÉ DE FONCTIONNEMENT D'UN SYSTÈME DE BUS

(30) Priorität: 21.03.2019 DE 102019107248
(43) Veröffentlichungstag der Anmeldung: 26.01.2022
(73) Patentinhaber: Eaton Intelligent Power Limited, Dublin 4 (IE)
(72) Erfinder: HELLER, Franz, 53757 Sankt Augustin (DE); HANSING, Matthias, 53604 Bad Honnef (DE); BOECKER, Olaf, 53347 Alfter (DE)
(74) Vertreter: Epping - Hermann - Fischer
(86) Internationale Anmeldenummer: PCT/EP2020/057256
(87) Internationale Veröffentlichungsnummer: WO 2020/187898

(56) Entgegenhaltungen:
- DE-A1- 10 316 219
- DE-A1- 102013 106 954
- US-A1- 2005 143 863

## Beschreibung

Die vorliegende Erfindung betrifft eine Busanordnung und ein Verfahren zum Betreiben einer Busanordnung.

Eine Busanordnung kann beispielsweise in der Automatisierungstechnik eingesetzt werden. Eine Busanordnung weist typisch einen Koordinator und mehrere Teilnehmer auf. Die Teilnehmer können als Aktoren oder Sensoren realisiert sein. Die Aktoren können Schaltgeräte wie Schütze, Motorstarter und Leistungsschalter, Befehlsgeräte und Frequenzumrichter sein.

Dokument DE 103 16 219 A1 beschreibt verbundene Zonen in einem Prozesssteuerungssystem, das geographisch voneinander getrennte Zonen oder Standorte enthält, die kommunikativ über eine Satelliten-Kommunikationsverbindung verbunden sind. Die erste Zone, die auch als lokale Zone und Hauptzone bezeichnet wird, weist ein Prozesssteuerungsnetzwerk auf, das zwei Prozesssteuerungen enthält, die über einen Bus mit einem Interzonenserver verbunden sind. Die entfernte Zone ist ebenfalls als Prozesssteuerungszone realisiert. Alarm- und Ereignisnachrichten können zwischen den Zonen übergeben werden. Dabei werden Alarm- oder Ereignisnachrichten von den Geräten in der fernen Zone über die entsprechenden Interzonenserver an ein lokales Zonengerät übertragen.

Dokument US 2005/0143863 A1 befasst sich mit einem Gebäudesteuerungssystem. Ein Bedienfeld, englisch field panel, umfasst eine Prozessorschaltung, einen Datenspeicher, eine Ethernet-Kommunikationsschaltung und eine Benutzerschnittstelle mit Drucktasten und einer Anzeige. Die Ethernet-Kommunikationsschaltung gibt Signale ab und empfängt Signale von einem Netzwerkbus. Die Benutzerschnittstelle ermöglicht es einem Benutzer, einen lokalen Zugang zu Gebäudesteuerdaten, die in dem Speicher gespeichert sind, wie auch Zugang zu Daten, die von anderen Bedienfeldern ermittelt werden, zu erhalten. Die Prozessorschaltung ist ausgelegt, Punktwerte wie etwa Sensorwerte zu empfangen und daraus beispielsweise Alarme zu generieren. Ein Alarmereignis kann lokal gespeichert oder an andere Knoten des Netzwerks kommuniziert werden.

Dokument DE 10 2013 106 954 A1 erläutert ein Verfahren zur Fehlerüberwachung. Dabei umfasst eine Steuer- und Datenübertragungsanlage zwei redundante Steuereinrichtungen, die über ein Kommunikationsnetzwerk mit Prozesseinrichtungen verbunden sind. Die Steuereinrichtungen umfassen jeweils einen Fehlerspeicher zur Speicherung von Fehlerinformationen in Form von Fehlerlisten und eine Anzeige, welche zur Darstellung wenigstens einer Fehlerliste ausgebildet ist. Um eine gesamtheitliche redundanzbezogene Diagnose der Steuer- und Datenübertragungsanlage zu ermöglichen, sind die Steuereinrichtungen dazu ausgebildet, anstehende Fehlerinformationen zur jeweiligen Partnersteuerung zu übertragen, damit die Fehlerinformationen auf beiden Seiten zur Verfügung stehen und in geeigneter Weise dargestellt werden können.

Eine Aufgabe der vorliegenden Erfindung ist es, eine Busanordnung und ein Verfahren zum Betreiben einer Busanordnung bereitzustellen, bei denen der Koordinator Informationen anzeigen kann.

Die Aufgabe wird mit den Gegenständen der unabhängigen Patentansprüche gelöst. Weiterbildungen und Ausgestaltungen sind jeweils Gegenstand der abhängigen Ansprüche.

In einer Ausführungsform umfasst eine Busanordnung einen Koordinator, einen ersten Teilnehmer mit einer ersten optischen Anzeige, einen zweiten Teilnehmer mit einer zweiten optischen Anzeige und einen Bus. Der Bus koppelt den Koordinator mit dem ersten und dem zweiten Teilnehmer. Der erste Teilnehmer ist ausgelegt, in einer Standardbetriebsphase eine erste lokale Information des ersten Teilnehmers an der ersten optischen Anzeige anzuzeigen. Der zweite Teilnehmer ist ausgelegt, in der Standardbetriebsphase eine zweite lokale Information des zweiten Teilnehmers an der zweiten optischen Anzeige anzuzeigen. Der Koordinator ist ausgelegt, in einer Anzeigebetriebsphase eine erste Information an den ersten Teilnehmer zu übermitteln, der die erste Information an der ersten optischen Anzeige anzeigt, und/oder eine zweite Information an den zweiten Teilnehmer zu übermitteln, der die zweite Information an der zweiten optischen Anzeige anzeigt.

Mit Vorteil kann der Koordinator in der Anzeigebetriebsphase die optischen Anzeigen der Teilnehmer verwenden, um eine Information oder mehrere Informationen anzuzeigen.

In einer Ausführungsform ist der Koordinator frei von einer optischen Anzeige. Somit ist auch ein Koordinator, der selber keine Information anzeigen kann, in der Lage, die Information oder mehrere Informationen über die optischen Anzeigen der Teilnehmer anzuzeigen.

In einer alternativen Ausführungsform umfasst der Koordinator eine optische Anzeige. Mit Vorteil wird ein Benutzer bereits auf die Information aufmerksam, wenn er vor einem der Teilnehmer steht.

In einer Ausführungsform schaltet der Koordinator von der Standardbetriebsphase in die Anzeigebetriebsphase um, nachdem er einen Fehler des zweiten Teilnehmers festgestellt hat, und übermittelt dann die erste Information an den ersten Teilnehmer. Alternativ schaltet der Koordinator von der Standardbetriebsphase in die Anzeigebetriebsphase um, nachdem er einen Fehler des ersten Teilnehmers festgestellt hat, und übermittelt die zweite Information an den zweiten Teilnehmer.

In einer Ausführungsform schaltet der Koordinator von der Standardbetriebsphase in die Anzeigebetriebsphase in einem Fehlerfall des Bussystems um.

In einer Ausführungsform umfasst die Busanordnung mindestens einen weiteren Teilnehmer mit jeweils einer Anzeige. Der Koordinator schaltet von der Standardbetriebsphase in die Anzeigebetriebsphase um, nachdem er einen Fehler des mindestens einen weiteren Teilnehmers festgestellt hat, und übermittelt dann die Informationen an die fehlerfrei operierenden Teilnehmer.

In einer Ausführungsform ist die erste lokale Information eine Statusinformation des ersten Teilnehmers und die zweite lokale Information ist eine Statusinformation des zweiten Teilnehmers. Eine Statusinformation kann beispielsweise die Angabe sein, dass der jeweilige Teilnehmer an den Bus angeschlossen ist, seine Spannungsversorgung funktioniert und er keinen internen Fehler feststellt.

In einer Ausführungsform wird die erste lokale Information durch permanente Emission von Licht durch die erste optische Anzeige. Die zweite lokale Information wird durch permanente Emission von Licht durch die zweite optische Anzeige angezeigt.

In einer Ausführungsform wird die erste Information durch blinkende Emission von Licht durch die erste optische Anzeige und die zweite Information durch blinkende Emission von Licht durch die zweite optische Anzeige angezeigt. Bei der blinkenden Emission von Licht sendet die jeweilige optische Anzeige Lichtimpulse aus. Die Dauer und die Frequenz der Lichtimpulse können so gewählt sein, dass sie mit dem menschlichen Auge wahrnehmbar sind (und sich durch das Auge von einer permanenten Emission oder einem Zustand ohne Emission unterscheiden lassen).

In einer Ausführungsform erfolgt die blinkende Emission von Licht durch die erste optische Anzeige in Abhängigkeit von der ersten Information bei unterschiedlichen Frequenzen, mit unterschiedlichen Tastverhältnissen und/oder mit unterschiedlichen Mustern. Ein Muster kann z.B. lange und kurze Pulse umfassen (ähnlich dem Morsecode). Die optische Anzeige kann somit Licht in Form von Pulsen bei mindestens zwei Frequenzen emittieren. Entsprechendes gilt für die zweite optische Anzeige.

In einer Ausführungsform umfasst die erste optische Anzeige eine erste Anzahl N von Leuchtdioden und die zweite optische Anzeige eine zweite Anzahl M von Leuchtdioden.

In einer Ausführungsform sind die erste Anzahl N und die zweite Anzahl M gleich 1.

In einer Ausführungsform umfasst der Bus elektrische Leitungen. Der Bus ist ein leitungs- oder drahtgebundener Bus.

Alternativ kann der Bus ein optischer Bus sein.

Alternativ kann der Bus teilweise als optischer Bus und teilweise als leitungs- oder drahtgebundener Bus realisiert sein.

In einer Ausführungsform umfasst der Bus eine erste Signalleitung, die den ersten Teilnehmer und den Koordinator koppelt, eine zweite Signalleitung, die den zweiten Teilnehmer an den ersten Teilnehmer anschließt, und mindestens eine Busleitung, die den Koordinator mit dem ersten und dem zweiten Teilnehmer verbindet.

In einer Ausführungsform umfasst die Busanordnung einen dritten Teilnehmer mit einer dritten optischen Anzeige. Der Bus koppelt den Koordinator mit dem dritten Teilnehmer. In der Standardbetriebsphase ist der dritte Teilnehmer ausgelegt, eine dritte lokale Information des dritten Teilnehmers an der dritten optischen Anzeige anzuzeigen.

In einer Ausführungsform umfasst der Bus eine dritte Signalleitung, die den dritten Teilnehmer an den zweiten Teilnehmer anschließt. Die mindestens eine Busleitung verbindet den Koordinator mit dem dritten Teilnehmer.

In einer Ausführungsform schaltet der Koordinator von der Standardbetriebsphase in die Anzeigebetriebsphase um, nachdem er einen Fehler des dritten Teilnehmers festgestellt hat, und übermittelt die erste und die zweite Information an den ersten und an den zweiten Teilnehmer derart, dass die erste optische Anzeige und die zweite optische Anzeige ein Lauflicht in Richtung auf den dritten Teilnehmer bilden.

In einer Ausführungsform schaltet der Koordinator von der Standardbetriebsphase in die Anzeigebetriebsphase um, nachdem er einen Fehler des ersten Teilnehmers festgestellt hat, und übermittelt die zweite und die dritte Information an den zweiten und an den dritten Teilnehmer derart, dass die zweite optische Anzeige und die dritte optische Anzeige ein Lauflicht in Richtung auf den ersten Teilnehmer bilden.

In einer Ausführungsform umfasst die Busanordnung mindestens einen weiteren Teilnehmer, der zwischen dem Koordinator und dem ersten Teilnehmer angeordnet ist. Bei einem Fehler des ersten Teilnehmers kann somit ein Lauflicht vom Koordinator in Richtung des ersten Teilnehmers und ein Lauflicht von einem Ende der Busanordnung zum ersten Teilnehmer erzeugt werden.

In einer Ausführungsform schaltet der erste Teilnehmer von der Standardbetriebsphase in die Anzeigebetriebsphase um, nachdem er einen Fehler des Koordinators und/oder des zweiten Teilnehmers festgestellt hat, und übermittelt die dritte Information an den dritten Teilnehmer. Der erste Teilnehmer kann z.B. auch die erste Information an der ersten optischen Anzeige anzeigen. Alternativ kann auch ein anderer Teilnehmer diese Verfahrensschritte durchführen.

In einer Ausführungsform ist der Koordinator ausgelegt, in einer Konfigurationsphase über die erste Signalleitung den ersten Teilnehmer zu aktivieren und über die mindestens eine Busleitung ein Telegramm abzusenden, das eine erste Teilnehmeradresse enthält. Der erste Teilnehmer ist ausgelegt, die erste Teilnehmeradresse zu speichern,
In einer Ausführungsform ist der erste Teilnehmer ausgelegt, anschließend in der Konfigurationsphase über die zweite Signalleitung den zweiten Teilnehmer zu aktivieren. Der Koordinator ist ausgelegt, über die mindestens eine Busleitung ein Telegramm, das eine zweite Teilnehmeradresse enthält, abzusenden. Der zweite Teilnehmer ist ausgelegt, die zweite Teilnehmeradresse zu speichern.

In einer Ausführungsform umfasst ein Verfahren zum Betreiben einer Busanordnung: Eine erste lokale Information eines ersten Teilnehmers wird durch eine erste optische Anzeige des ersten Teilnehmers in einer Standardbetriebsphase angezeigt, und eine zweite lokale Information eines zweiten Teilnehmers wird durch eine zweite optische Anzeige des zweiten Teilnehmers in der Standardbetriebsphase angezeigt. Weiter wird eine erste Information durch einen Koordinator in einer Anzeigebetriebsphase an den ersten Teilnehmer übermittelt, der die erste Information an der ersten optischen Anzeige anzeigt, und/oder eine zweite Information wird durch den Koordinator in der Anzeigebetriebsphase an den zweiten Teilnehmer übermittelt, der die zweite Information an der zweiten optischen Anzeige anzeigt.

Ein Bus koppelt den Koordinator mit dem ersten und dem zweiten Teilnehmer.

In einer Ausführungsform umfasst der Bus eine erste Signalleitung, die den ersten Teilnehmer und den Koordinator koppelt, eine zweite Signalleitung, die den zweiten Teilnehmer an den ersten Teilnehmer anschließt, und mindestens eine Busleitung, die den Koordinator mit dem ersten und dem zweiten Teilnehmer verbindet.

Das Verfahren zum Betreiben einer Busanordnung kann z.B. durch die Busanordnung nach einer der oben definierten Ausführungsformen und mit den oben beschriebenen Schritten realisiert werden.

Das Verfahren zeigt das Verwenden von optischen Signalen in einer Busanordnung. Die Busanordnung kann auch Bussystem bezeichnet werden.

In einer Ausführungsform wird die optische Statusanzeige in einer Busanordnung typischerweise von den Teilnehmern lokal gesteuert. Wenn nun aber ein Teilnehmer keine Anzeige aufweist, z.B. der Koordinator, dann kann er sich die Ansteuerung der Statusanzeige seiner Busteilnehmer bedienen. Das bedeutet, die Busteilnehmer stellen ihre optische Statusanzeige auch anderen zur Verfügung. Die Busanordnung kann daher z.B. somit in der Lage sein, seinen Zustand auch kollektiv zu nutzen. In einem Beispiel sind typischerweise, wenn eine Busanordnung keinerlei Fehler aufweist, die Status-Leuchtdioden (abgekürzt Status-LED) der einzelnen Teilnehmer lokal angesteuert und eingeschaltet. Atypisch lassen sich Fehler, die ein Koordinator in einem Netzwerk feststellt, im seinem eigenen Netzwerk, Busanordnung oder System anzeigen.

Detektiert in einem Beispiel der Koordinator einen fehlerhaften Teilnehmer und dieser Fehler wird u.U. vom Teilnehmer selbst nicht angezeigt oder kann nicht angezeigt werden, so wird diese Anzeige von der Busanordnung übernommen werden. Der Koordinator steuert dazu die Status-LEDs der Teilnehmer z.B. als Lauflicht an, um auf den betroffenen Teilnehmer hinzuweisen. Die Anzeige der System-Status-LEDs würden dazu als Lauflicht von links nach rechts wie auch von rechts nach links genutzt. Über größere Busdistanzen kann sich ein richtungsweisendes Lauflicht als sehr hilfreich erweisen. Der dann noch darzustellende Fehler selbst kann dann mit einer weiteren Kombination angezeigt werden.

Weitere Alternativen für die durch die Status-LEDs gezeigten Signale sind z.B. unterschiedliches Frequenzblinken, zyklisches wie auch azyklisches Blinken, Musterblinken, Segmentblinken usw. und Kombination dieser Signale.

Segmentblinken bedeutet, dass nicht alle Teilnehmer diese Signale zeigen, sondern ausschließlich eine vorgegebene Anzahl von Teilnehmern vor dem fehlerbehafteten Teilnehmer und eine Anzahl von Teilnehmern nach dem fehlerbehafteten Teilnehmer.

In einer Ausführungsform kann die Busanordnung einen Koordinator (auch Netzwerkkoordinator genannt) mit einer minimalen Benutzeroberfläche aufweisen. Der Koordinator kann einfacher als eine speicherprogrammierbare Steuerung realisiert sein, die einige Statusinformationen anzeigen könnte. Daher realisiert die Busanordnung andere Mittel zur Anzeige einiger Statusinformationen (z.B. Ausfall eines Teilnehmers), nämlich die Übertragung von Informationen an die optischen Anzeigen der anderen Teilnehmer.

In einer Ausführungsform ist der Koordinator frei von einer Statusanzeige (z.B. wenn der Koordinator nicht als Kombination mit einer speicherprogrammierbarer Steuerung, englisch: programmable logic controller, abgekürzt PLC, oder mit einem Gateway realisiert ist). Der Koordinator zeigt trotzdem einen Status an, nämlich durch intelligente Ansteuerung anderer Leuchtdioden (abgekürzt LEDs) im Netzwerk.

In einer Ausführungsform realisiert die Busanordnung eine intelligente Status-LED für Diagnoseaufgaben. Der Koordinator hat keine Diagnose-LED. Alle Diagnosen werden dem Anwender über die Status-LEDs in den Teilnehmern angezeigt. In einem Beispiel gibt es einen defekten Teilnehmer. Der defekte Teilnehmer selbst kann eine dunkle Status-LED (d.h. ausgeschaltete Status-LED) oder eine blinkende Status-LED oder eine leuchtende Status-LED (d.h. angeschaltete Status-LED) haben (z.B. abhängig vom Fehler). Um einem Instandhaltungsingenieur das Auffinden des defekten Teilnehmers zu erleichtern, beginnt der Koordinator mit Meldungen an die Teilnehmer, z.B. einem Lauflicht vom Anfang und vom Ende des Busses, das auf den defekten Teilnehmer zeigt. Die Meldungen können zyklische oder azyklische Meldungen sein. Diese Meldungen können mittels azyklischem Datenverkehr erfolgen; alternativ sind Meldungen auch im zyklischen Datenverkehr möglich. Alternativ können die Meldungen auch z.B. über die Signalleitungen (auch Select-Leitungen oder SEL-Leitungen genannt) mitgeteilt werden. Auch Kombinationen der Mitteilungen wären hierbei möglich. Die Meldungen müssen auch nicht ausschließlich vom Koordinator allein angesteuert werden, auch die Teilnehmer haben die Möglichkeit, diese Meldungen nach den oben angeführten Ausführungsformen nutzen zu können.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:
Figuren 1A bis 1C Beispiele einer Busanordnung;
Figur 2 ein weiteres Beispiel einer Busanordnung zu verschiedenen Zeitpunkten;
Figur 3 ein Beispiel eines Koordinators; und
Figur 4 ein weiteres Beispiel einer Busanordnung.

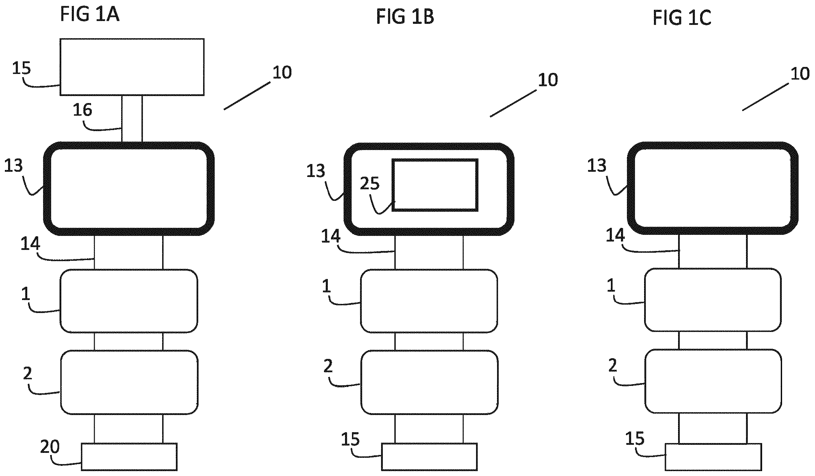

Figur 1A zeigt ein Beispiel einer Busanordnung 10. Die Busanordnung 10 umfasst einen Koordinator 13, einen ersten und einen zweiten Teilnehmer 1, 2 und einen Bus 14, der den Koordinator 13 mit dem ersten und dem zweiten Teilnehmer 1, 2 koppelt. Zusätzlich umfasst die Busanordnung 10 eine Abschlussschaltung 20 (englisch: termination circuit), die an einem Ende des Busses 14 angebracht ist. Die Abschlussschaltung 20 weist z.B. Widerstände auf, die die einzelnen Busleitungen des Busses 14 hochohmig miteinander verbinden. Zusätzlich umfasst die Busanordnung 10 ein Kontrollsystem 15, das mit dem Koordinator 13 gekoppelt ist. Das Kontrollsystem 15 kann eine speicherprogrammierbarer Steuerung, englisch: programmable logic controller, abgekürzt PLC, umfassen. Beispielsweise verbindet ein weiterer Bus 16 das Kontrollsystem 15 mit dem Koordinator 13. Der weitere Bus 16 ist beispielsweise als Can Bus implementiert.

Der Koordinator 13 ist zur Koordination des Busses 14 und des ersten und des zweiten Teilnehmers 1, 2 ausgelegt. Der Koordinator 13 kann zusätzlich als Gateway realisiert sein. Somit ist der Koordinator 13 eine Komponente, welche zwischen dem weiteren Bus 16 und dem Bus 14 eine Verbindung herstellt. Damit bearbeitet Koordinator 13 Daten, die er über den weiteren Bus 16 empfängt, bevor er die Daten über den Bus 14 weiterleitet. Umgekehrt bearbeitet der Koordinator 13 Daten, die er über den Bus 14 empfängt, bevor er die Daten über den weiteren Bus 16 abgibt. Der Koordinator 13 kann auch als Medienkonverter, Router, Repeater, Abzweiger oder Switch realisiert sein.

Figur 1B zeigt ein weiteres Beispiel der Busanordnung 10, die eine Weiterbildung des in Figur 1A gezeigten Beispiels ist.

Das Bussystem 10 ist frei von dem Kontrollsystem 15. Ebenso kann das Bussystem 10 frei von dem weiteren Bus 16 sein. Der Koordinator 13 kann eine speicherprogrammierbare Steuerung 25, englisch: programmable logic controller, abgekürzt PLC, umfassen.

Figur 1C zeigt ein weiteres Beispiel der Busanordnung 10, die eine Weiterbildung der in Figuren 1A und 1B gezeigten Beispiele ist. Der Koordinator 13 ist frei von der speicherprogrammierbaren Steuerung 25. Optional weist der Koordinator 13 keine externen Anschlüsse bis auf die Anschlüsse zum Bus 14 und mindestens einen Spannungsversorgungsanschluss auf. Der Koordinator 13 dient z.B. als Taktgeber für die Busanordnung 10. In Figuren 1B und 1C ist eine Busanordnung 10 (auch Bussystem genannt) mit einer Architektur des Koordinators 13 dargestellt, welcher nicht mit einem darüber liegenden Netzwerk verbunden ist (Nicht-Netzwerk) und z.B. auch über keine optische Anzeige verfügt.

Der Koordinator 13 führt bei der Inbetriebnahme folgende Funktionen durch: Inbetriebnahme des Busses 14 und Adresszuweisung an die Teilnehmer 1, 2, Durchführung einer Datenerfassung der Teilnehmer 1, 2.

Der Koordinator 13 hat während der Laufzeit als Aufgaben: Das Steuern des zyklischen Datenverkehrs, das Steuern von azyklischem Datenverkehr wie auch das Ersetzen von Teilnehmern 1, 2, wenn einer oder mehrere "verloren" gehen. Die Teilnehmer 1, 2 können ausgetauscht werden (dabei kann die Seriennummer des ausgetauschten und des neuen Teilnehmers verschieden sein). Ein Teilnehmer 1, 2 kann auch Busteilnehmer oder Gerät (englisch: device) genannt sein.

Die Teilnehmer 1, 2 haben während der Laufzeit als Aufgaben: Mit anderen Teilnehmern kommunizieren, ein internes Programm ausführen. Ein solches Programm kann über den Bus 14 (oder auch über eine weitere Kommunikationsschnittstelle des Teilnehmers) in den Teilnehmer geladen und gestartet werden, oder der Teilnehmer koordiniert den Programmablauf selbsttätig.

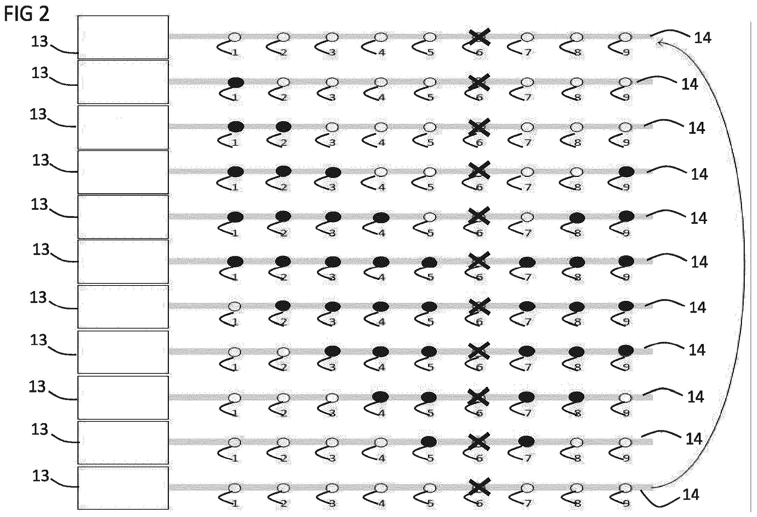

Figur 2 zeigt ein Beispiel für die Busanordnung 10, die eine Weiterbildung der in den Figuren 1A bis 1C gezeigten Beispiele ist. In Figur 2 ist die Busanordnung 10 zu verschiedenen Zeitpunkten, nämlich zu elf Zeitpunkten gezeigt. Die Busanordnung 10 umfasst den Koordinator 13 und eine Anzahl L von Teilnehmern 1 - 9. Im in Figur 2 gezeigten Beispiel ist die erste Anzahl L = 9. Somit umfasst die Busanordnung 10 einen ersten bis einen neunten Teilnehmer 1 - 9. Der Koordinator 13 und die Teilnehmer 1 - 9 bilden eine Kette, englisch daisy chain. Die Teilnehmer 1 - 9 sind jeweils mit ihrem jeweiligen Vorgänger verbunden. Der Bus 14 verwendet ein Reihenschaltungsprinzip.

Im Beispiel in Figur 2 wird angenommen, dass der sechste Teilnehmer 6 einen Fehler aufweist; z.B. kann der sechste Teilnehmer 6 defekt sein, nicht an einer Spannungsversorgung angeschlossen sein oder auch vollständig fehlen, das heißt aus dem Bussystem 10 entnommen sein. Der Fehler im sechsten Teilnehmer 6 ist durch ein Kreuz in Figur 2 angedeutet.

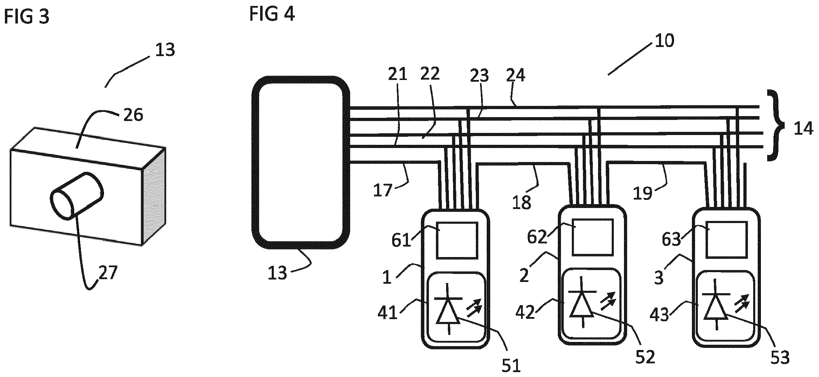

Die Teilnehmer 1 - 5, 7 - 9 weisen eine optische Anzeige auf (siehe Figur 4). Die optische Anzeige kann beispielsweise eine Leuchtdiode umfassen. Die Anzahl der Leuchtdioden pro Teilnehmer kann z.B. exakt 1 sein. In Figur 2 ist ein Teilnehmer, dessen optische Anzeige kein Signal angibt, als Kreis mit weißer Fläche und ein Teilnehmer, dessen optische Anzeige ein Signal abgibt, als Kreis oder Ellipse mit dunkler Fläche gezeigt.

Die Teilnehmer 1 bis 5 zwischen dem Koordinator 13 und dem Teilnehmer 6 mit dem Fehler steuern ihre jeweilige optische Anzeige derart an, dass eine Laufrichtung eines Signals vom Koordinator 13 bis zum Teilnehmer 6 mit dem Fehler realisiert wird. Die Teilnehmer 7 - 9 zwischen dem Ende des Busses 14 und dem Teilnehmer 6 mit dem Fehler steuern ihre jeweilige optische Anzeige derart an, dass eine Laufrichtung eines Signals vom Ende des Busses 14 zum Teilnehmer 6 mit dem Fehler gerichtet ist.

Mit Vorteil können die Signale, die eine Laufrichtung aufweisen, eine Person auf den Ort des Teilnehmers mit dem Fehler hinweisen. Mit den eine Laufrichtung aufweisenden Signalen der optischen Anzeigen wird in Lauflicht erzeugt.

So ist in der ersten Zeile die Busanordnung 10 zu einem ersten Zeitpunkt gezeigt, an dem alle Teilnehmer 1 - 5, 7 - 9 kein Signal an ihrer jeweiligen optischen Anzeige abgeben. In der zweiten Zeile ist die Busanordnung 10 zu einem zweiten Zeitpunkt gezeigt, der nach dem ersten Zeitpunkt liegt, bei dem der erste Teilnehmer 1 über seine optische Anzeige ein Signal abgibt. In der dritten Zeile ist die Busanordnung 10 zu einem dritten Zeitpunkt, der nach dem zweiten Zeitpunkt liegt, angegeben, bei der der erste und der zweite Teilnehmer 1, 2 über ihre jeweilige optische Anzeige ein Signal abgeben. Entsprechend kommt zu einem vierten Zeitpunkt, wie in der vierten Zeile dargestellt, der dritte Teilnehmer 3, zu einem fünften Zeitpunkt der vierte Teilnehmer 4 und zu einem sechsten Zeitpunkt der fünfte Teilnehmer 5 zu den Teilnehmern hinzu, die über ihre jeweilige optische Anzeige ein Signal abgeben.

Schließlich gibt zu einem siebten Zeitpunkt der erste Teilnehme 1 über seine optische Anzeige kein Signal ab. Nachfolgend zu einem achten Zeitpunkt geben der zweite Teilnehmer 2, zu einem neunten Zeitpunkt der dritte Teilnehmer 3, zu einem zehnten Zeitpunkt der vierte Teilnehmer 4 sowie zu einem elften Zeitpunkt auch der fünfte Teilnehmer 5 kein Signal über die jeweilige optische Anzeige ab. Entsprechendes realisiert der siebte bis zum neunten Teilnehmer 7 - 9 ein Lauflicht. Der Vorgang kann sich dann periodisch oder als Antwort auf ein Trigger-Signal wiederholen.

In Figur 2 ist ausschließlich ein Beispiel dargestellt. Der Teilnehmer 6 mit Fehler kann auch ein anderer Teilnehmer wie der erste bis zum fünften oder der siebte bis zum neunten Teilnehmer 1 - 5, 7 - 9 oder ein weiterer nicht gezeigter Teilnehmer sein. So wird mit Vorteil eine Fehlersuche bei einer Busanordnung 10 erleichtert.

Figur 3 zeigt ein Beispiel für den Koordinator 13, der eine Weiterbildung der in Figuren 1A bis 1C und 2 gezeigten Ausführungsformen ist. Der Koordinator 13 weist ein Gehäuse 26 auf, das z.B. als Kunststoffgehäuse realisiert sein kann. Der Koordinator 13 weist Anschlüsse 27 auf, über die der Bus 14 angeschlossen werden kann, z.B. durch einen Steckvorgang oder einen Schraubvorgang. Der Koordinator 13 kann frei von einer optischen Anzeige sein. Der Koordinator 13 kann optional einen Schalter aufweisen. Mit dem Schalter kann z.B. der Beginn einer Koordinationsphase ausgelöst werden.

Figur 4 zeigt ein Beispiel für die Busanordnung 10, die eine Weiterbildung der in obigen Figuren gezeigten Beispiele ist. Der erste Teilnehmer 1 weist eine erste optische Anzeige 41 auf. Die erste optische Anzeige umfasst eine erste Anzahl N von Leuchtdioden 51. Die erste Anzahl N kann z.B. gleich 1 sein. Weiter weist der erste Teilnehmer 1 eine Applikationseinrichtung 61 auf.

Entsprechend weist der zweite Teilnehmer 2 eine zweite optische Anzeige 42 auf. Die zweite optische Anzeige 42 umfasst eine zweite Anzahl M von Leuchtdioden 52. Die zweite Anzahl M kann ebenfalls 1 sein. Weiter weist der zweite Teilnehmer 2 eine Applikationseinrichtung 62 auf. Entsprechend weist der dritte Teilnehmer 3 eine dritte optische Anzeige 43 auf. Die dritte optische Anzeige 43 umfasst eine dritte Anzahl L von Leuchtdioden 53, die 1 sein kann. Weiter weist der dritte Teilnehmer 3 eine Applikationseinrichtung 63 auf. Die Leuchtdioden 51 - 53 können auch als Status-LED bezeichnet sein. Mindestens eine der Leuchtdioden 51 - 53 kann optional als zweifarbige oder mehrfarbige Leuchtdiode (englisch bicolor LED / multicolor LED) hergestellt sein.

Die Applikationseinrichtung 61, 62, 63 kann als Aktor-, Messgeräts- oder Sensor-Einrichtung implementiert sein. Somit können der erste, zweite und dritte Teilnehmer 1 - 3 als Aktor, Messgerät und/oder Sensor realisiert sein. Der Aktor kann z.B. als Schaltgerät wie ein Schütz, ein Motorstarter und ein Leistungsschalter, Befehlsgerät oder/und Frequenzumrichter realisiert sein.

Der Bus 14 umfasst eine erste Signalleitung 17, die einen Anschluss des Koordinators 13 mit einem Anschluss des ersten Teilnehmers 1 verbindet. Die erste Signalleitung 17 ist nicht direkt an den zweiten Teilnehmer 2 oder einen weiteren Teilnehmer 3 - 9 angeschlossen. Weiter umfasst der Bus 14 eine zweite Signalleitung 18, die einen Anschluss des ersten Teilnehmers 1 an einen Anschluss des zweiten Teilnehmers 2 anschließt. Zusätzlich umfasst der Bus 14 eine dritte Signalleitung 19, die einen Anschluss des zweiten Teilnehmers 2 an einen Anschluss der dritten Teilnehmers 3 anschließt. Darüber hinaus umfasst der Bus 14 mindestens eine Busleitung 21, die den Koordinator 13 mit den Teilnehmern und somit mit dem ersten, zweiten und dritten Teilnehmer 1 - 3 verbindet. Ein Signal auf der mindestens einen Busleitung 21 erreicht die Teilnehmer 1 - 3. Der Bus 14 kann eine weitere Busleitung 22 umfassen, die den Koordinator 13 mit den Teilnehmern 1 -3 verbindet. Die mindestens eine Busleitung 21 und die weitere Busleitung 22 können auch als erste und zweite Busleitung bezeichnet werden.

Zusätzlich kann der Bus 14 z.B. eine Versorgungsleitung 23 umfassen, die eine Spannungsversorgung des Koordinators 13 mit einer Spannungsversorgung des ersten Teilnehmers 1, einer Spannungsversorgung des zweiten Teilnehmers 2 und einer Spannungsversorgung des dritten Teilnehmers 3 verbindet. Die Spannungsversorgung kann jeweils als Spannungsregulator realisiert sein. Ferner kann der Bus 14 z.B. eine Bezugspotentialleitung 24 umfassen, die einen Bezugspotentialanschluss des Koordinators 13 mit Bezugspotentialanschlüssen der Teilnehmer 1 - 3 verbindet. Der Koordinator 13 versorgt die Teilnehmer 1 - 3 über die Versorgungsleitung 23 und die Bezugspotentialleitung 24 mit elektrischer Energie.

Der Bus 14 ist als linearer Bus realisiert. Der Bus 14 kann als serieller Bus ausgebildet sein. Der Koordinator 13 kann als Master implementiert sein. Die Teilnehmer 1 - 3 können als Slaves realisiert sein. Der Bus 14 ist z.B. nicht als ringförmiger Bus implementiert. Der Koordinator 13 und die Teilnehmer 1 - 3 bilden eine Kette. Die erste bis zur dritten Signalleitung 17, 18, 19 bilden eine Daisy-Chain. Die Busleitung 21 und die weitere Busleitung 22 können z.B. eine RS 485 Busleitung/Datenleitung sein. Der Bus 14 ist als Flachbandkabel oder Rundkabel realisiert. Gemäß Figur 4 kann der Bus 14 z.B. aus fünf Adern bestehen. Alternativ kann der Bus 14 eine andere Anzahl von Adern, z.B. zwei bis vier Adern oder sechs bis acht Adern, aufweisen.

Der Koordinator 13 umfasst z.B. einen nicht gezeigten Prozessorkern, der an die erste Signalleitung 17 angeschlossen ist. Der Prozessorkern kann als Mikroprozessor implementiert sein. Der erste Teilnehmer 1 umfasst einen nicht gezeigten Prozessorkern, der an die erste und die zweite Signalleitung 17, 18 angeschlossen ist. Ebenso umfasst der zweite Teilnehmer 2 einen nicht gezeigten Prozessorkern, der an die zweite und an die dritte Signalleitung 18, 19 angeschlossen ist. Ebenso umfasst der dritte Teilnehmer 3 einen nicht gezeigten Prozessorkern, der an die dritte Signalleitung 19 und eine etwaige weitere Signalleitung angeschlossen ist. Die jeweiligen Prozessorkerne können als Mikroprozessor implementiert sein.

Die Busleitung 21 und die weitere Busleitung 22 sowie der Koordinator 13 und die Teilnehmer 1 - 3 können gemäß TIA/EIA-485 A Standard implementiert sein.

Auf eine Ausschaltphase folgt beispielsweise eine Betriebsphase. Die Betriebsphase beginnt mit einer Konfigurationsphase. Der Koordinator 13 weist eine Adresse z.B. 0 auf. Im ersten bis zum dritten Teilnehmer 1 - 3 sind keine Teilnehmeradressen gespeichert. Der Koordinator 13 weist mit Hilfe der Signalleitungen 17, 18, 19 sukzessive den Teilnehmern 1 - 3 Teilnehmeradressen zu. Somit werden die geographischen Positionen und damit die Reihenfolge der Teilnehmer 1 - 3 am Bus 14 festgelegt.

Der Koordinator 13 aktiviert über die erste Signalleitung 17 den ersten Teilnehmer 1. Nach der Aktivierung sendet der Koordinator 13 über die Busleitung 21 und die weitere Busleitung 22 ein Telegramm, das eine erste Teilnehmeradresse enthält, an alle Teilnehmer 1 - 3. Ausschließlich der aktivierte Teilnehmer, nämlich der erste Teilnehmer 1, übernimmt die im Telegramm enthaltene erste Teilnehmeradresse in seinen flüchtigen Speicher. Die erste Teilnehmeradresse kann 1 sein. Damit übernimmt auch der erste geographische Teilnehmer 1 neben dem Koordinator 13 die Teilnehmeradresse Nummer 1. Ab diesem Zeitpunkt nimmt dann dieser Teilnehmer 1 alle Nachrichten, die an die Teilnehmeradresse 1 gerichtet werden, entgegen.

In einem weiteren Schritt der Konfigurationsphase sendet der Koordinator 13 ein Telegramm an den ersten Teilnehmer 1 mit dem Befehl, die ausgangsseitige Signalleitung, also die zweite Signalleitung 18, zu aktivieren. Der erste Teilnehmer 11 aktiviert über ein Signal auf der zweiten Signalleitung 18 den zweiten Teilnehmer 2. Anschließend sendet der Koordinator 13 ein Telegramm an alle Teilnehmer 1 - 3, das die zweite Teilnehmeradresse, z.B. 2, enthält. Da ausschließlich der zweite Teilnehmer 2 aktiviert ist, übernimmt ausschließlich der zweite Teilnehmer 2 die zweite Teilnehmeradresse in seinen flüchtigen Speicher. Dieses Verfahren führt der Koordinator 13 solange fort, bis alle erfassbaren Teilnehmer eine Teilnehmeradresse zugewiesen bekommen haben. Folglich wird der dritte Teilnehmer 3 aktiviert und ihm eine dritte Teilnehmeradresse, etwa 3, zugewiesen.

In der Betriebsphase nach Abschluss der Konfigurationsphase ist der Koordinator 13 nunmehr in der Lage, alle Teilnehmer 1 - 3 über die Teilnehmeradressen zu adressieren.

In der Betriebsphase können Teilnehmer ausfallen. In dem in Figur 2 gezeigten Beispiel kann der sechste Teilnehmer 6 ausgefallen sein. Der Koordinator 13 ist weiter in der Lage, Telegramme an die nicht ausgefallenen Teilnehmer 1 - 5 und 7 - 9 über die Busleitung 21 und die weitere Busleitung 22 zu senden und die nicht ausgefallenen Teilnehmer 11, 62 zu steuern oder ihre Daten abzufragen. Auch nach Ausfall eines oder mehrerer Teilnehmer 6 läuft die Busanordnung 10 weiter. Somit kann der Koordinator 13 in der Anzeigebetriebsphase eine erste Information an den ersten Teilnehmer 1 übermitteln, der die erste Information an der ersten optischen Anzeige 41 anzeigt. Weiter kann der Koordinator eine zweite Information an den zweiten Teilnehmer 2 übermitteln, der die zweite Information an der zweiten optischen Anzeige 42 anzeigt. Durch das Lauflicht kann auf den fehlerbehafteten Teilnehmer 6 hingewiesen werden.

Bei der Inbetriebnahme der Busanordnung 10 (auch System genannt) werden die Teilnehmer 1 - 3 vom Koordinator 13 sukzessiv in aufsteigender Adressfolge adressiert. Dieses Verfahren endet vor dem ersten fehlenden Teilnehmer bzw. am letztmöglich zu adressierenden Teilnehmer. Die geographische Position der Busteilnehmer 1 - 3 wird dabei über eine Select-Leitung sichergestellt. Angaben der Teilnehmer 1 - 3 können eine Geräte ID wie Vendor, Device, Version usw. sein. Derartige Angaben werden dabei von jedem Teilnehmer 1 - 3 ausgelesen und im Koordinator 13 nicht-flüchtig abgespeichert. Über dieses Verfahren lassen sich die Teilnehmer 1 - 3 einzeln, aber auch Teilnehmer-Segmente ein- und ausschalten und in einem dafür vorgesehenen Betriebsmodus darüber hinaus zusätzlich austauschen. Der Koordinator 13 hat die Aufgabe, den zyklischen und azyklischen Datentransport zu koordinieren.

Wenn die Busanordnung 10 keinerlei Fehler aufweist, können die Teilnehmer dies dadurch kommunizieren, dass alle Status-LEDs 51 - 53 eingeschaltet sind (z.B. sie emittieren dauernd Licht). Wenn der Koordinator einen Fehler in einem Teilnehmer erkennt, zum Beispiel, weil dieser Teilnehmer nicht mehr auf eine Kommunikation auf dem Bus antwortet, dann verwendet der Koordinator 13 sporadisch bzw. in überschaubaren Abständen die Leuchtdioden 51 - 53 der Teilnehmer 1 - 3 (bzw. der übrigen Teilnehmer) im System dazu, den Anwender optisch auf den Fehler aufmerksam zu machen. Er nimmt dazu die Status-LEDs 51 - 53 seiner Teilnehmer 1 - 3 als Anzeige zur Hilfe. Bei größeren Busdistanzen hat der Anwender nun die Möglichkeit, sich besser zu dieser betroffenen Fehlerstelle hin zu orientieren.

Alternativ umfasst die Busanordnung 10 weniger als drei Teilnehmer oder mehr als drei Teilnehmer.

In einer alternativen Ausführungsform ist der Bus 14 ohne die Signalleitungen 17 - 19 realisiert.

### Bezugszeichenliste

- 1 - 9: Teilnehmer
- 10: Busanordnung
- 13: Koordinator
- 14: Bus
- 15: Kontrollsystem
- 16: weiterer Bus
- 17 - 19: Signalleitung
- 20: Abschlussschaltung
- 21: mindestens eine Busleitung
- 22: weitere Busleitung
- 23: Versorgungsleitung
- 24: Bezugspotentialleitung
- 25: speicherprogrammierbare Steuerung
- 26: Gehäuse
- 27: Anschlüsse
- 41 - 43: optische Anzeige
- 51 - 53: Leuchtdiode
- 61 - 63: Applikationseinrichtung

## Patentansprüche

1. Busanordnung, umfassend
- einen Koordinator (13),
- einen ersten Teilnehmer (1) mit einer ersten optischen Anzeige (41),
- einen zweiten Teilnehmer (2) mit einer zweiten optischen Anzeige (42),
- einen dritten Teilnehmer (3) mit einer dritten optischen Anzeige (43) und
- einen Bus (14), der den Koordinator (13) mit dem ersten, dem zweiten und dem dritten Teilnehmer (1, 2, 3) koppelt, wobei in einer Standardbetriebsphase der erste Teilnehmer (1) ausgelegt ist, eine erste lokale Information des ersten Teilnehmers (1) an der ersten optischen Anzeige (41) anzuzeigen, der zweite Teilnehmer (2) ausgelegt ist, eine zweite lokale Information des zweiten Teilnehmers (2) an der zweiten optischen Anzeige (42) anzuzeigen, und der dritte Teilnehmer (3) ausgelegt ist, eine dritte lokale Information des dritten Teilnehmers (3) an der dritten optischen Anzeige (43) anzuzeigen,
**dadurch gekennzeichnet,**
**dass** der Koordinator (13) von der Standardbetriebsphase in eine Anzeigebetriebsphase umschaltet, nachdem er einen Fehler des ersten Teilnehmers (1) festgestellt hat, und darauf eine zweite und eine dritte Information an den zweiten und den dritten Teilnehmer (2, 3) derart übermittelt, dass die zweite optische Anzeige (42) und die dritte optische Anzeige (43) ein Lauflicht in Richtung auf den ersten Teilnehmer (1) bilden.

2. Busanordnung nach Anspruch 1,
wobei die erste lokale Information eine Statusinformation des ersten Teilnehmers (1) ist und die zweite lokale Information eine Statusinformation des zweiten Teilnehmers (2) ist.

3. Busanordnung nach einem der Ansprüche 1 oder 2,
wobei die erste lokale Information durch permanente Emission von Licht durch die erste optische Anzeige (41) und die zweite lokale Information durch permanente Emission von Licht durch die zweite optische Anzeige (42) angezeigt wird.

4. Busanordnung nach einem der Ansprüche 1 bis 3,
wobei die erste Information durch blinkende Emission von Licht durch die erste optische Anzeige (41) und die zweite Information durch blinkende Emission von Licht durch die zweite optische Anzeige (42) angezeigt wird.

5. Busanordnung nach Anspruch 4,
wobei die blinkende Emission von Licht durch die erste optische Anzeige (41) in Abhängigkeit von der ersten Information bei unterschiedlichen Frequenzen, mit unterschiedlichen Tastverhältnissen und/oder mit unterschiedlichen Mustern erfolgt.

6. Busanordnung nach einem der Ansprüche 1 bis 5,
wobei die erste optische Anzeige (41) eine erste Anzahl N von Leuchtdioden (51) umfasst und die zweite optische Anzeige (42) eine zweite Anzahl M von Leuchtdioden (52) umfasst.

7. Busanordnung nach Anspruch 6,
wobei die erste Anzahl N und die zweite Anzahl M gleich 1 sind.

8. Busanordnung nach einem der Ansprüche 1 bis 7,
wobei der Bus (14) umfasst:
- eine erste Signalleitung (17), die den ersten Teilnehmer (1) und den Koordinator (13) koppelt,
- eine zweite Signalleitung (18), die den zweiten Teilnehmer (2) an den ersten Teilnehmer (1) anschließt, und
- mindestens eine Busleitung (21), die den Koordinator (13) mit dem ersten und dem zweiten Teilnehmer (1, 2) verbindet.

9. Busanordnung nach Anspruch 8,
wobei der Koordinator (13) ausgelegt ist, in einer Konfigurationsphase über die erste Signalleitung (17) den ersten Teilnehmer (1) zu aktivieren und über die mindestens eine Busleitung (21) ein Telegramm abzusenden, das eine erste Teilnehmeradresse enthält, und
wobei der erste Teilnehmer (1) ausgelegt ist, die erste Teilnehmeradresse zu speichern.

10. Verfahren zum Betreiben einer Busanordnung, umfassend:
- Anzeigen einer ersten lokalen Information eines ersten Teilnehmers (1) durch eine erste optische Anzeige (41) des ersten Teilnehmers (1) in einer Standardbetriebsphase, und
- Anzeigen einer zweiten lokalen Information eines zweiten Teilnehmers (2) durch eine zweite optische Anzeige (42) des zweiten Teilnehmers (2) in der Standardbetriebsphase, und
- Anzeigen einer dritten lokalen Information eines dritten Teilnehmers (3) an einer dritten optischen Anzeige (43) des dritten Teilnehmers (3) in der Standardbetriebsphase, wobei ein Bus (14) den Koordinator (13) mit dem ersten, dem zweiten und dem dritten Teilnehmer (1, 2, 3) koppelt,
**dadurch gekennzeichnet,**
**dass** der Koordinator (13) von der Standardbetriebsphase in eine Anzeigebetriebsphase umschaltet, nachdem er einen Fehler des ersten Teilnehmers (1) festgestellt hat, und darauf in der Anzeigebetriebsphase eine zweite und eine dritte Information an den zweiten und den dritten Teilnehmer (2, 3) derart übermittelt, dass die zweite optische Anzeige (42) und die dritte optische Anzeige (43) ein Lauflicht in Richtung auf den ersten Teilnehmer (1) bilden.

## Claims

1. A bus arrangement, comprising
- a coordinator (13),
- a first device (1) with a first optical display (41),
- a second device (2) with a second optical display (42),
- a third device (3) with a third optical display (43) and
- a bus (14) which couples the coordinator (13) to the first, second and third devices (1, 2, 3), wherein, in a standard operating phase, the first device (1) is designed to display first local information of the first device (1) on the first optical display (41), the second device (2) is designed to display second local information of the second device (2) on the second optical display (42), and the third device (3) is designed to display third local information of the third device (3) on the third optical display (43),
**characterized in that**
the coordinator (13) switches over from the standard operating phase to a display operating phase after the coordinator (13) has detected an error in the first device (1), and then transmits second and third information to the second and third devices (2, 3) such that the second optical display (42) and the third optical display (43) form a running light in the direction of the first device (1).

2. The bus arrangement according to claim 1,
wherein the first local information is status information of the first device (1) and the second local information is status information of the second device (2).

3. The bus arrangement according to any one of claims 1 or 2, wherein the first local information is displayed by means of a permanent emission of light by the first optical display (41) and the second local information is displayed by means of a permanent emission of light by the second optical display (42).

4. The bus arrangement according to any one of claims 1 to 3,
wherein the first information is displayed by means of a flashing emission of light by the first optical display (41) and the second information is displayed by means of a flashing emission of light by the second optical display (42).

5. The bus arrangement according to claim 4,
wherein the flashing emission of light is performed by means of the first optical display (41) at different frequencies, with different duty cycles and/or with different patterns, depending on the first information.

6. The bus arrangement according to any one of claims 1 to 5,
wherein the first optical display (41) comprises a first number N of light-emitting diodes (51) and the second optical display (42) comprises a second number M of light-emitting diodes (52).

7. The bus arrangement according to claim 6,
wherein the first number N and the second number M are equal to 1.

8. The bus arrangement according to any one of claims 1 to 7, wherein the bus (14) comprises:
- a first signal line (17) coupling the first device (1) and the coordinator (13),
- a second signal line (18) connecting the second device (2) to the first device (1), and
- at least one bus line (21) coupling the coordinator (13) to the first and second devices (1, 2).

9. The bus arrangement according to claim 8,
wherein the coordinator (13) is designed to activate the first device (1) in a configuration phase via the first signal line (17) and to send a telegram containing a first device address via the at least one bus line (21), and wherein the first device (1) is designed to store the first device address.

10. A method for operating a bus arrangement, comprising:
- displaying first local information of a first device (1) by means of a first optical display (41) of the first device (1) in a standard operating phase, and
- displaying second local information of a second device (2) by means of a second optical display (42) of the second device (2) in the standard operating phase, and
- displaying third local information of a third device (3) on a third optical display (43) of the third device (3) in the standard operating phase, wherein a bus (14) couples the coordinator (13) to the first, second and third devices (1, 2, 3),
**characterized in that**
the coordinator (13) switches over from the standard operating phase to a display operating phase after the coordinator (13) has detected an error in the first device (1), and then transmits second and third information to the second and third devices (2, 3) in the display operating phase such that the second optical display (42) and the third optical display (43) form a running light in the direction of the first device (1).

## Revendications

1. Système de bus, comprenant
- un coordinateur (13),
- un premier participant (1) comportant un premier affichage (41) optique,
- un deuxième participant (2) comportant un deuxième affichage (42) optique,
- un troisième participant (3) comportant un troisième affichage (43) optique et
- un bus (14), lequel couple le coordinateur (13) au premier, au deuxième et au troisième participant (1, 2, 3),
dans lequel, dans une phase de fonctionnement standard, le premier participant (1) est conçu pour afficher des premières informations locales du premier participant (1) sur le premier affichage (41) optique, le deuxième participant (2) est conçu pour afficher des deuxièmes informations locales du deuxième participant (2) sur le deuxième affichage (42) optique, et le troisième participant (3) est conçu pour afficher des troisièmes informations locales du troisième participant (3) sur le troisième affichage (43) optique,
**caractérisé en ce que**,
le coordinateur (13) passe de la phase de fonctionnement standard à une phase de fonctionnement d'affichage après avoir détecté une erreur du premier participant (1), puis transmet des deuxièmes et troisièmes informations aux deuxième et troisième participants (2, 3) de telle sorte que le deuxième affichage (42) optique et le troisième affichage (43) optique forment une lumière de circulation dans la direction du premier participant (1).

2. Système de bus selon la revendication 1,
dans lequel les premières informations locales sont des informations d'état du premier participant (1) et les deuxièmes informations locales sont des informations d'état du deuxième participant (2).

3. Système de bus selon l'une quelconque des revendications 1 ou 2,
dans lequel les premières informations locales sont affichées par émission permanente de lumière par le premier affichage (41) optique et les deuxièmes informations locales sont affichées par émission permanente de lumière par le deuxième affichage (42) optique.

4. Système de bus selon l'une quelconque des revendications 1 à 3,
dans lequel les premières informations sont affichées par émission clignotante de lumière par le premier affichage (41) optique et les deuxièmes informations sont affichées par émission clignotante de lumière par le deuxième affichage (42) optique.

5. Système de bus selon la revendication 4,
dans lequel l'émission clignotante de lumière par le premier affichage (41) optique est effectuée à différentes fréquences, à différents cycles de service et/ou à différents modèles en fonction des premières informations.

6. Système de bus selon l'une quelconque des revendications 1 à 5,
dans lequel le premier affichage (41) optique comprend un premier nombre N de diodes électroluminescentes (51) et le deuxième affichage (42) optique comprend un deuxième nombre M de diodes électroluminescentes (52).

7. Système de bus selon la revendication 6,
dans lequel le premier nombre N et le deuxième nombre M sont égaux à 1.

8. Système de bus selon l'une quelconque des revendications 1 à 7,
dans lequel le bus (14) comprend :
- une première ligne de signalisation (17), laquelle couple le premier participant (1) et le coordinateur (13),
- une deuxième ligne de signalisation (18), laquelle connecte le deuxième participant (2) au premier participant (1), et
- au moins une ligne de bus (21), laquelle relie le coordinateur (13) aux premier et deuxième participants (1, 2).

9. Système de bus selon la revendication 8,
dans lequel le coordinateur (13) est conçu pour activer le premier participant (1) dans une phase de configuration par l'intermédiaire de la première ligne de signalisation (17) et pour envoyer un télégramme, lequel contient une première adresse de participant, par l'intermédiaire de l'au moins une ligne de bus (21), et dans lequel le premier participant (1) est conçu pour mémoriser la première adresse de participant.

10. Procédé de fonctionnement d'un système de bus, comprenant :
- l'affichage de premières informations locales d'un premier participant (1) par un premier affichage (41) optique du premier participant (1) dans une phase de fonctionnement standard, et
- l'affichage de deuxièmes informations locales d'un deuxième participant (2) par un deuxième affichage (42) optique du deuxième participant (2) dans une phase de fonctionnement standard, et
- l'affichage de troisièmes informations locales d'un troisième participant (3) sur un troisième affichage (43) optique du troisième participant (3) dans la phase de fonctionnement standard, dans lequel un bus (14) relie le coordinateur (13) au premier, au deuxième et au troisième participant (1, 2, 3),
**caractérisé en ce que**,
le coordinateur (13) passe de la phase de fonctionnement standard à une phase de fonctionnement d'affichage après avoir détecté une erreur du premier participant (1), puis, dans la phase de fonctionnement d'affichage, transmet des deuxièmes et troisièmes informations aux deuxième et troisième participants (2, 3) de telle sorte que le deuxième affichage (42) optique et le troisième affichage (43) optique forment une lumière de circulation dans la direction du premier participant (1).
